# EUROPEAN PATENT APPLICATION

(11) **EP 3 381 882 A1**
(43) Date of publication of application: **03.10.2018**
(21) Application number: 16868655.8
(22) Date of filing: 25.11.2016
(51) Int. Cl.: C03C 27/12, B32B 7/02, B32B 17/10, B32B 27/30

(54) **INTERLAYER FOR LAMINATED GLASS, AND LAMINATED GLASS**

(30) Priority: 27.11.2015 JP 2015232068
(71) Applicant: Sekisui Chemical Co., Ltd., Osaka-shi, Osaka 530-0047 (JP)
(72) Inventor: NAKAJIMA, Daisuke, Koka-shi Shiga 528-8585 (JP); YAMAMOTO, Masaki, Koka-shi Shiga 528-8585 (JP); NOHARA, Atsushi, Koka-shi Shiga 528-8585 (JP); SHOUHI, Hajime, Koka-shi Shiga 528-8585 (JP)
(74) Representative: Cabinet Beau de Loménie
(86) International application number: PCT/JP2016/084929
(87) International publication number: WO 2017/090712

(57) **Abstract**

The present invention aims to provide an interlayer film for a laminated glass that generates heat under application of a voltage and warms frozen glass to melt frost or ice and also contributes to an excellent appearance of a laminated glass when used in the production of the laminated glass. The present invention can also provide a laminated glass produced using the interlayer film for a laminated glass. The present invention relates to an interlayer film for a laminated glass including: a conductive layer including a substrate containing a thermoplastic resin and a conductive film formed on the substrate; and a first resin layer containing a polyvinyl acetal stacked on the conductive film side of the conductive layer, the substrate having a thermal shrinkage measured in conformity with JIS C2151 of 1.0% to 3.5% in both of MD and TD directions after heat treatment at 150°C for 30 minutes, the substrate and the first resin layer having a difference in the thermal shrinkage measured in conformity with JIS C2151 of 10% or less in absolute value in both of MD and TD directions after heat treatment at 150°C for 30 minutes.

## Description

### TECHNICAL FIELD

The present invention relates to an interlayer film for a laminated glass that generates heat under application of a voltage and warms frozen glass to melt frost or ice and also contributes to an excellent appearance of a laminated glass when used in the production of the laminated glass. The present invention also relates to a laminated glass produced using the interlayer film for a laminated glass.

### BACKGROUND ART

Laminated glass is less likely to scatter even when fractured by external impact and can be safely used. Due to this advantage, laminated glass has been widely used for vehicles, buildings, or the like.

In recent years, laminated glass is desired to have various properties. A study is now made on a technique of heating the laminated glass itself, used for a windowpane, to warm the frozen windowpane to melt frost or ice thereon.

As one technique of heating the laminated glass itself, a method of forming a conductive film on a glass surface of the laminated glass to warm the laminated glass by heat derived from resistance upon energization is studied. Such a laminated glass including a conductive film formed thereon is disclosed in, for example, Patent Literature 1.

As a method of heating the laminated glass itself, a method of stacking a conductive layer in an interlayer film for a laminated glass is also studied. Such an interlayer film for a laminated glass is typically produced by a method of stacking a resin layer containing a polyvinyl acetal on a conductive layer side of a conductive layer prepared by forming a conductive film on a substrate containing a thermoplastic resin by the sputtering process.

However, a laminated glass produced using an interlayer film for a laminated glass including a conductive layer may disadvantageously have a defective appearance.

### CITATION LIST

### - Patent Literature

Patent Literature 1: JP 2008-222513 A

### SUMMARY OF INVENTION

### - Technical Problem

The present invention aims to provide an interlayer film for a laminated glass that generates heat under application of a voltage and warms frozen glass to melt frost or ice and also contributes to an excellent appearance of a laminated glass when used in the production of the laminated glass. The present invention also aims to provide a laminated glass produced using the interlayer film for a laminated glass.

### - Solution to problem

The present invention relates to an interlayer film for a laminated glass including: a conductive layer including a substrate containing a thermoplastic resin and a conductive film formed on the substrate; and a first resin layer containing a polyvinyl acetal stacked on the conductive film side of the conductive layer, the substrate having a thermal shrinkage measured in conformity with JIS C2151 of 1.0% to 3.5% in both of MD and TD directions after heat treatment at 150°C for 30 minutes, the substrate and the first resin layer having a difference in the thermal shrinkage measured in conformity with JIS C2151 of 10% or less in absolute value in both of MD and TD directions after heat treatment at 150°C for 30 minutes.

The present invention is specifically described in the following.

The present inventors studied about the cause of the appearance defects of a laminated glass produced using an interlayer film for a laminated glass including a conductive layer. As a result, they found out that the cause is thermal shrinking of a substrate and a resin layer of a conductive layer.

As a substrate for forming a conductive layer, a substrate having a low thermal shrinkage is selected so that a uniform conductive film can be formed by a sputtering process or the like. A laminated glass is typically produced by sandwiching an interlayer film for a laminated glass between two glass plates and then pressure-bonding them with heat. In this process, the interlayer film for a laminated glass is pressure-bonded with heat to follow a curved face of the glass. In the case where a substrate having a low thermal shrinkage is used, the conductive layer fails to sufficiently follow a curved face, leading to a crease-like appearance defect. In addition, in the case where a substrate having a low thermal shrinkage is used, a difference in the thermal shrinkage between the conductive layer and the resin layer may cause misalignment therebetween during the pressure-bonding, presumably leading to an appearance defect. In contrast, in the case where the substrate used has too high a thermal shrinkage, the conductive film may be thermally shrunk to be cracked, causing a conduction failure.

As a result of further intensive studies, the present inventors found out that adjustment of both the thermal shrinkage of the substrate used for forming a conductive layer and a difference in the thermal shrinkage between the substrate and the resin layer respectively within predetermined ranges enables production of an interlayer film for a laminated glass that generates heat under application of a voltage and warms frozen glass to melt frost or ice and also contributes to an excellent appearance of a laminated glass when used in the production of the laminated glass. The present invention was thus completed.

The interlayer film for a laminated glass of the present invention has a conductive layer including a substrate and a conductive film formed on the substrate. The presence of such a conductive layer enables the interlayer film for a laminated glass to generate heat under application of a voltage and warm frozen glass to melt frost or ice.

The substrate has a thermal shrinkage measured in conformity with JIS C2151 of 1.0% to 3.5% in both of MD and TD directions after heat treatment at 150°C for 30 minutes. A specimen used for the measurement in conformity with JIS C2151 is a specimen with a size of 100 mm × 100 mm. Here, the specimen is prepared in such a manner that the lengthwise direction and the transverse direction of the specimen respectively correspond to the MD direction and the TD direction confirmed by the method described later. The use of a substrate having such a thermal shrinkage enables formation of a uniform conductive film by a sputtering process or the like and also allows the conductive layer to sufficiently follow a curved surface of glass in the production of a laminated glass. Thus, a crease-like appearance defect and cracking due to thermal shrinking in the conductive film can be both prevented. The lower limit of the thermal shrinkage is preferably 1.5% and the upper limit thereof is preferably 3.0%.

The MD direction (machine direction) as used herein refers to an extrusion direction in the extrusion processing of a substrate into a sheet. The TD direction (transverse direction) refers to a direction perpendicular to the MD direction.

The MD direction and the TD direction can be confirmed, for example, by the following method. Specifically, the substrate is placed in a thermostat bath at 150°C for 30 minutes, and the direction in which the shrinkage is largest is the MD direction and the direction perpendicular to the MD direction is the TD direction.

The substrate preferably has a Young's modulus of 1 GPa or more. The use of a substrate having a Young's modulus of 1 GPa or more improves the adhesiveness between the substrate and the first resin layer, thereby preventing an appearance defect caused by misalignment between the conductive layer and the first resin layer during the production of a laminated glass. The Young's modulus of the substrate is more preferably 1.5 GPa or more, still more preferably 2 GPa or more. The upper limit of the Young's modulus of the substrate is preferably 10 GPa.

The Young's modulus is indicated by a gradient of a straight part of a stress-strain curve obtained by a tensile test in conformity with JIS K7127 at 23°C.

A first resin layer and a second resin layer each containing a polyvinyl acetal and a plasticizer, which will be described later, commonly have a Young's modulus of less than 1 GPa.

The substrate contains a thermoplastic resin. Examples of the thermoplastic resin contained in the substrate include chain polyolefins (e.g., polyethylene, polypropylene, poly(4-methylpentene-1), and polyacetal), alicyclic polyolefins (e.g., ring-opening metathesis polymers or addition polymers of norbornenes and addition copolymers of norbornenes and other olefins), biodegradable polymers (e.g., polylactic acid and polybutylsuccinate), polyamides (e.g., Nylon 6, Nylon 11, and Nylon 66), aramids, polyesters (e.g., polymethyl methacrylate, polyvinyl chloride, polyvinylidene chloride, polystyrene, styrene-copolymerized polymethyl methacrylate, polycarbonate, polypropylene terephthalate, polyethylene terephthalate, polyethylene naphthalate, polybutylene terephthalate, and polyethylene-2,6-naphthalate), polyethersulfone, polyether ether ketone, modified polyphenylene ethers, polyphenylene sulfide, polyetherimide, polyimides, polyarylates, tetrafluoroethylene resins, trifluoroethylene resins, polychlorotrifluoroethylene resins, tetrafluoroethylene-hexafluoropropylene copolymers, and polyvinylidene fluoride. Each of these thermoplastic resins is used alone or in combination of two or more thereof to adjust the thermal shrinkage and Young's modulus each within a predetermined range.

The substrate may contain conventionally known additives such as a UV blocking agent or an antioxidant as needed.

The UV blocking agent used may be a conventionally known UV blocking agent such as a metal UV blocking agent, a metal oxide UV blocking agent, a UV blocking agent having a benzotriazole structure, a UV blocking agent having a benzophenone structure, a UV blocking agent having a triazine structure, a malonic acid ester UV blocking agent, an oxanilide UV blocking agent, and a benzoate UV blocking agent.

The antioxidant used may be a conventionally known antioxidant such as a phenol antioxidant, a sulfur antioxidant, and a phosphor antioxidant.

The thickness of the substrate is not particularly limited. The lower limit thereof is preferably 10 µm and the upper limit thereof is preferably 200 µm. The thickness of the substrate within this range allows formation of a uniform conductive film by a sputtering process or the like and prevents an appearance defect such as creases during the production of a laminated glass. The lower limit of the thickness of the substrate is more preferably 20 µm and the upper limit thereof is more preferably 150 µm.

Examples of the conductive film include conductive films made of a conductive metal such as copper, silver, nickel, iridium, and titanium, and transparent conductive films made of tin-doped indium oxide (ITO), fluorine-doped tin oxide (FTO), or the like. In particular, preferred are transparent conductive films made of tin-doped indium oxide (ITO), fluorine-doped tin oxide (FTO), or the like. The conductive metal may be an alloy. Examples of the alloy as the conductive metal include alloys containing copper, silver, nickel, iridium, titanium, or the like.

The thickness of the conductive film is not particularly limited. The lower limit thereof is preferably 0.001 µm and the upper limit thereof is preferably 1 µm. With the thickness of the conductive film within this range, the conductive film generates heat under application of a voltage and warms frozen glass to melt frost or ice. The lower limit of the thickness of the conductive film is more preferably 0.005 µm, still more preferably 0.01 µm, while the upper limit thereof is more preferably 0.1 µm, still more preferably 0.05 µm.

The conductive film may be formed on the substrate by any method, and a conventionally known method such as a sputtering process, ion plating, a plasma CVD process, a vapor deposition process, an application process, or a dipping process may be employed. In particular, a sputtering process is preferred because a uniform conductive film can be formed.

The interlayer film for a laminated glass of the present invention has a first resin layer containing a polyvinyl acetal stacked on the conductive film side of the conductive layer.

The first resin layer and the substrate of the conductive layer have a difference in the thermal shrinkage measured in conformity with JIS C2151 of 10% or less in absolute value in both of MD and TD directions after heat treatment at 150°C for 30 minutes. With the difference in the thermal shrinkage between the first resin layer and the substrate of the conductive layer of 10% or less in absolute value, an appearance defect caused by misalignment between the first resin layer and the conductive layer during the production of a laminated glass can be prevented. The difference in the thermal shrinkage between the first resin layer and the substrate of the conductive layer is preferably smaller in absolute value. The difference in the thermal shrinkage is more preferably 8% or less, most preferably 0%.

The difference in the thermal shrinkage can be obtained by comparing the shrinkage in the MD direction of the substrate of the conductive layer and the shrinkage in the MD direction of the first resin layer, comparing the shrinkage in the TD direction of the substrate of the conductive layer and the shrinkage in the TD direction of the first resin layer, and determining the difference of them.

The thermal shrinkage of the first resin layer can be adjusted not only by the types or amounts of the polyvinyl acetal and plasticizer used but also by the conditions for annealing treatment.

The MD direction and the TD direction of the first resin layer can be confirmed by the same method as that employed for confirming the MD direction and the TD direction of the substrate.

The first resin layer is preferably stacked on the conductive layer in such a manner that their MD directions and TD directions respectively set to correspond to each other. In the case where the thermal shrinkage of each layer is measured using an interlayer film for a laminated glass in which the conductive layer and the first resin layer are stacked, the layers are separated from each other by the following procedure, and the MD direction and TD direction thereof are respectively determined, followed by measurement of the thermal shrinkage. Specifically, a piece of 5 cm in length × 5 cm in width was cut out from the interlayer film for a laminated glass and allowed to stand in an environment of a temperature of 25°C and a humidity of 30% for two hours. Then, fingers are inserted between the conductive layer and the first resin layer, and the conductive layer is held by one hand and the first resin layer is held by the other hand. The layers are separated from each other by the hands at a rate of 1 to 2 cm/s. After the separation, the layers are allowed to further stand in an environment of a temperature of 25°C and a humidity of 30% for two hours. The MD and TD directions of each layer are confirmed after heat treatment at 150°C for 30 minutes, and the thermal shrinkage of each layer is measured.

The thermal shrinkage measured in conformity with JIS C2151 of the first resin layer is preferably 0.01 to 13.5% in both of the MD and TD directions after heat treatment at 150°C for 30 minutes. With the thermal shrinkage of the first resin layer within this range, an appearance defect caused by misalignment between the conductive layer and the first resin layer during the production of a laminated glass can be prevented. The thermal shrinkage of the first resin layer is more preferably 0.1 to 7%, still more preferably 1.0 to 5.8%, particularly preferably 1.0 to 5.0% in both of the MD and TD directions.

The specimen having a size of 100 mm × 100 mm is used for the measurement in conformity with JIS C2151. The specimen is cut out in such a manner that the MD direction and the TD direction confirmed by the above method respectively correspond to the longitudinal direction and the transverse direction of the specimen.

The first resin layer before stacked on the conductive layer preferably has a ten-point mean roughness Rz measured in conformity with JIS B0601-1982 of 45 µm or less on the surface to be in contact with the conductive layer. In the case where such an embossed resin layer is stacked on the conductive layer in such a manner that the embossed surface is in contact with the conductive layer, the adhesiveness between the first resin layer and the conductive layer is further enhanced, thereby preventing an appearance defect caused by misalignment between the conductive layer and the first resin layer during the production of a laminated glass. The ten-point mean roughness Rz is more preferably 40 µm or less, still more preferably 35 µm or less, particularly preferably 30 µm or less. The lower limit of the ten-point mean roughness Rz is not particularly limited. From the standpoint of preventing air from remaining between the conductive layer and the first resin layer to improve the transparency of the laminated glass, the lower limit is preferably 0.1 µm, more preferably 1 µm.

The thickness of the first resin layer is not particularly limited. The lower limit is preferably 100 µm and the upper limit is preferably 500 µm. With the thickness of the first resin layer within this range, sufficient durability can be achieved and the laminated glass to be obtained has satisfactory basic properties such as transparency and penetration resistance. The lower limit of the thickness of the first resin layer is more preferably 200 µm and the upper limit thereof is more preferably 400 µm.

The first resin layer contains a polyvinyl acetal. The use of a polyvinyl acetal and a plasticizer in combination can provide an interlayer film for a laminated glass exhibiting excellent adhesiveness to the conductive layer and glass.

The polyvinyl acetal is not particularly limited as long as it is obtainable by acetalization of polyvinyl alcohol with an aldehyde. Preferred is polyvinyl butyral. Two or more types of polyvinyl acetals may be used in combination as needed.

The lower limit of the degree of acetalization of the polyvinyl acetal is preferably 40 mol% and the upper limit thereof is preferably 85 mol%. The lower limit is more preferably 60 mol% and the upper limit is more preferably 75 mol%.

The lower limit of the hydroxy group content of the polyvinyl acetal is preferably 15 mol% and the upper limit thereof is preferably 35 mol%. With the hydroxy group content of 15 mol% or more, the adhesiveness between the interlayer film for a laminated glass and glass is improved. With the hydroxy group content of 35 mol% or less, the handleability of the interlayer film for a laminated glass is improved.

The degree of acetalization and the hydroxy group content can be measured in conformity with JIS K6728 "Testing methods for polyvinyl butyral".

The polyvinyl acetal can be prepared by acetalization of polyvinyl alcohol with an aldehyde.

The polyvinyl alcohol can be commonly prepared by saponification of polyvinyl acetate. Polyvinyl alcohol having a degree of saponification of 70 to 99.8 mol% is typically used. The degree of saponification of the polyvinyl alcohol is preferably 80 to 99.8 mol%.

The lower limit of the degree of polymerization of the polyvinyl alcohol is preferably 500 and the upper limit thereof is preferably 4,000. With the degree of polymerization of the polyvinyl alcohol of 500 or more, the laminated glass to be obtained has higher penetration resistance. With the degree of polymerization of the polyvinyl alcohol of 4,000 or less, formation of the interlayer film for a laminated glass is facilitated. The lower limit of the degree of polymerization of the polyvinyl alcohol is more preferably 1,000 and the upper limit thereof is more preferably 3,600.

The aldehyde is not particularly limited. Commonly, a C1-C10 aldehyde is suitably used. The C1-C10 aldehyde is not particularly limited, and examples thereof include n-butyraldehyde, isobutyraldehyde, n-valeraldehyde, 2-ethylbutyraldehyde, n-hexylaldehyde, n-octylaldehyde, n-nonylaldehyde, n-decylaldehyde, formaldehyde, acetaldehyde, and benzaldehyde. In particular, n-butyraldehyde, n-hexylaldehyde, and n-valeraldehyde are preferred, and n-butyraldehyde is more preferred. Each of these aldehydes may be used alone, or two or more thereof may be used in combination.

The first resin layer preferably contains a plasticizer. The plasticizer is not particularly limited, and examples thereof include organic ester plasticizers such as monobasic organic acid esters and polybasic organic acid esters, and phosphoric acid plasticizers such as organophosphate plasticizers and organophosphite plasticizers. The plasticizer is preferably a liquid plasticizer.

The monobasic organic acid esters are not particularly limited, and examples thereof include glycol esters obtained by a reaction between a glycol (e.g., triethylene glycol, tetraethylene glycol, and tripropylene glycol) and a monobasic organic acid (e.g., butyric acid, isobutyric acid, caproic acid, 2-ethylbutyric acid, heptylic acid, n-octylic acid, 2-ethylhexylic acid, pelargonic acid (or n-nonylic acid), and decylic acid). In particular, preferred are triethylene glycol dicaproic acid ester, triethylene glycol-di-2-ethylbutyric acid ester, triethylene glycol-di-n-octylic acid ester, triethylene glycol-di-2-ethylhexylic acid ester.

The polybasic organic acid esters are not particularly limited, and examples thereof include ester compounds of a polybasic organic acid (e.g., adipic acid, sebacic acid, and azelaic acid) and a C4-C8 linear or branched alcohol. In particular, preferred are dibutyl sebacic acid ester, dioctyl azelaic acid ester, and dibutyl carbitol adipic acid ester.

The organic ester plasticizers are not particularly limited, and examples thereof include triethylene glycol di-2-ethylbutyrate, triethylene glycol di-2-ethylhexanoate, triethylene glycol dicaprylate, triethylene glycol di-n-octanoate, triethylene glycol di-n-heptanoate, tetraethylene glycol di-n-heptanoate, tetraethylene glycol di-2-ethylhexanoate, dibutyl sebacate, dioctyl azelate, dibutyl carbitol adipate, ethylene glycol di-2-ethylbutyrate, 1,3-propylene glycol di-2-ethylbutyrate, 1,4-butylene glycol di-2-ethylbutyrate, diethylene glycol di-2-ethylbutyrate, diethylene glycol di-2-ethylhexanoate, dipropylene glycol di-2-ethylbutyrate, triethylene glycol di-2-ethylpentanoate, tetraethylene glycol di-2-ethylbutyrate, diethylene glycol dicaprylate, dihexyl adipate, dioctyl adipate, hexylcyclohexyl adipate, diisononyl adipate, heptylnonyl adipate, dibutyl sebacate, oil-modified sebacic alkyds, mixtures of phosphoric acid esters and adipic acid esters, adipic acid esters, mixed type adipic acid esters prepared from C4-C9 alkyl alcohols and C4-C9 cyclic alcohols, and C6-C8 adipic acid esters such as hexyl adipate.

The organophosphate plasticizer is not particularly limited, and examples thereof include tributoxyethyl phosphate, isodecylphenyl phosphate, and triisopropyl phosphate.

For less hydrolysis, the plasticizer contains preferably triethylene glycol di-2-ethylhexanoate (3GO), triethylene glycol di-2-ethylbutyrate (3GH), tetraethylene glycol di-2-ethylhexanoate (4GO), or dihexyl adipate (DHA), more preferably tetraethylene glycol di-2-ethylhexanoate (4GO) or triethylene glycol di-2-ethylhexanoate (3GO), still more preferably triethylene glycol di-2-ethylhexanoate(3GO).

The amount of the plasticizer in the first resin layer is not particularly limited. The lower limit thereof is preferably 30 parts by weight and the upper limit thereof is preferably 90 parts by weight based on 100 parts by weight of the polyvinyl acetal. When the amount of the plasticizer is 30 parts by weight or more, the interlayer film for laminated glass has a lower melt viscosity, improving the deaeration properties in the production of a laminated glass using the obtained interlayer film for a laminated glass. When the amount of the plasticizer is 90 parts by weight or less, the transparency of the interlayer film for a laminated glass is improved. The lower limit of the amount of the plasticizer is more preferably 35 parts by weight and the upper limit thereof is more preferably 70 parts by weight, still more preferably 63 parts by weight.

In the case where the interlayer film for a laminated glass of the present invention is required to have heat insulation properties, the first resin layer may contain a heat-ray absorbent.

The heat-ray absorbent is not particularly limited as long as it can block infrared rays. Preferred is at least one selected from the group consisting of tin-doped indium oxide (ITO) particles, antimony-doped tin oxide (ATO) particles, aluminum-doped zinc oxide (AZO) particles, indium-doped zinc oxide (IZO) particles, tin-doped zinc oxide particles, silicon-doped zinc oxide particles, lanthanum hexaboride particles, and cerium hexaboride particles.

The first resin layer may contain conventionally known additives such as an antioxidant, a light stabilizer, and an antistatic agent, as needed.

The adhesion force between the conductive layer and the first resin layer is preferably 1 N/50 mm or more. With the adhesive force of 1 N/50 mm or more, the adhesiveness between the conductive layer and the first resin layer is high to allow the interlayer film for a laminated glass to exhibit excellent handleability and an appearance defect caused by misalignment between the conductive layer and the first resin layer during the production of a laminated glass can be further prevented. The adhesion force is more preferably 2 N/50 mm or more, still more preferably 3 N/50 mm or more, particularly preferably 10 N/50 mm or more. The upper limit of the adhesion force is not particularly limited and is practically about 20 N/50 mm.

The interlayer film for a laminated glass of the present invention may further have a second resin layer containing a polyvinyl acetal stacked on the side opposite to the conductive film side of the conductive layer. The presence of such a second resin layer can further improve the adhesiveness to glass.

The second resin layer may be one similar to the first resin layer. The second resin layer may be the same as or different from the first resin layer.

The second resin layer and the substrate of the conductive layer preferably have a difference in the thermal shrinkage measured in conformity with JIS C2151 of 10% or less in absolute value in both of the MD and TD directions after heat treatment at 150°C for 30 minutes. With the difference in the thermal shrinkage between the second resin layer and the substrate of the conductive layer of 10% or less in absolute value, an appearance defect caused by misalignment between the second resin layer and the conductive layer during the production of a laminated glass can be prevented. The difference in the thermal shrinkage between the second resin layer and the substrate of the conductive layer in absolute value is more preferably 8% or less. The lower limit of the difference in the thermal shrinkage between the second resin layer and the substrate of the conductive layer in absolute value is not particularly limited, and is most preferably 0% but may be 0.001%.

The difference in the thermal shrinkage can be obtained by comparing the shrinkage in the MD direction of the substrate of the conductive layer and the shrinkage in the MD direction of the second resin layer, comparing the shrinkage in the TD direction of the substrate of the conductive layer and the shrinkage in the TD direction of the second resin layer, and determining the difference of them.

The MD direction and the TD direction of the second resin layer can be confirmed by the same method as that employed for confirming the MD direction and the TD direction of the substrate.

The second resin layer is preferably stacked on the conductive layer in such a manner that their MD directions and TD directions respectively correspond to each other. In the case where the thermal shrinkage of each layer is measured from an interlayer film for a laminated glass in which the conductive layer and the second resin layer are stacked, the method similar to that employed for separating the conductive layer and the first resin layer may be employed for the separation and measurement of the thermal shrinkage.

The thermal shrinkage measured in conformity with JIS C2151 of the second resin layer is preferably 0.01 to 13.5% in both of the MD and TD directions after heat treatment at 150°C for 30 minutes. With the thermal shrinkage of the second resin layer within this range, an appearance defect caused by misalignment between the conductive layer and the second resin layer during the production of a laminated glass can be prevented. The thermal shrinkage of the second resin layer is more preferably 0.1 to 7%, still more preferably 1.0 to 5.8%, particularly preferably 1.0 to 5.0% in both of the MD and TD directions.

The specimen having a size of 100 mm × 100 mm is used for the measurement in conformity with JIS C2151. The specimen is cut out in such a manner that the MD direction and the TD direction confirmed by the method described later respectively correspond to the longitudinal direction and the transverse direction of the specimen.

The second resin layer before stacked on the conductive layer preferably has a ten-point mean roughness Rz measured in conformity with JIS B0601-1982 of 45 µm or less on the surface to be in contact with the conductive layer. With the ten-point mean roughness Rz within the above range, the adhesiveness between the second resin layer and the conductive layer is further enhanced, thereby preventing an appearance defect caused by misalignment between the second resin layer and the conductive layer during the production of a laminated glass. The ten-point mean roughness Rz is more preferably 40 µm or less, still more preferably 35 µm or less, particularly preferably 30 µm or less. The lower limit of the ten-point mean roughness Rz is not particularly limited. From the standpoint of preventing air from remaining between the conductive layer and the second resin layer to improve the transparency of the laminated glass, the lower limit is preferably 0.1 µm, more preferably 1 µm.

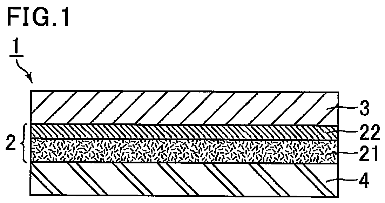

Fig. 1 shows a schematic view of an exemplary interlayer film for a laminated glass of the present invention.

An interlayer film for a laminated glass 1 of Fig. 1 includes a conductive layer 2 including a substrate 21 and a conductive film 22 formed on the substrate 21, a first resin layer 3 stacked on the conductive film 22 side of the conductive layer 2, and a second resin layer 4 stacked on the substrate 21 side of the conductive layer 2.

The interlayer film for a laminated glass of the present invention may be produced by any method. Preferably, the first resin layer, the conductive layer, and optionally the second resin layer are stacked in the stated order, and the obtained laminate is thermal compression bonded. In particular, a so-called roll-to-roll method is preferred in which the layers are unwounded from rolls prepared by individually winding the layers and stacked to provide a laminate, the laminate is thermal compression bonded by being passed between heated press rolls to provide an interlayer film for a laminated glass, and the interlayer film for a laminated glass is wound into a roll.

The heating temperature during the thermal compression bonding in the roll-to-roll method is preferably in the range of 65°C to 150°C, the pressure is preferably in the range of 0.1 to 5 kN, and the feed tension is preferably 10 to 200 N. The thermal compression bonding conditions falling within the above ranges improve the adhesiveness between the conductive layer and the first and second resin layers, further preventing an appearance defect.

The present invention also encompasses a laminated glass including a pair of glass plates and the interlayer film for a laminated glass of the present invention interposed between the pair of glass plates.

The glass plate may be a commonly used transparent glass plate. Examples thereof include inorganic glass plates such as float glass plates, polished glass plates, figured glass plates, meshed glass plates, wired glass plates, colored glass plates, heat-absorbing glass plates, heat-reflecting glass plates, and green glass plates. A UV-blocking glass plate having a UV-blocking layer on a glass surface may also be used. Other examples of the glass plates include organic plastic plates made of polyethylene terephthalate, polycarbonate, polyacrylate, or the like.

The glass plates may include two or more types of glass plates. For example, the laminated glass may be a laminated glass including the interlayer film for a laminated glass of the present invention between a transparent float glass plate and a colored glass plate such as a green glass plate. The glass plates may include two or more glass plates with different thicknesses.

The laminated glass of the present invention may be produced by any method, and a conventionally known method may be employed.

### - Advantageous Effects of Invention

The present invention can provide an interlayer film for a laminated glass that generates heat under application of a voltage and warms frozen glass to melt frost or ice and also contributes to excellent appearance of a laminated glass when used in production of the laminated glass. The present invention can also provide a laminated glass produced using the interlayer film for a laminated glass.

### BRIEF DESCRIPTION OF DRAWINGS

Fig. 1 is a schematic view illustrating an exemplary interlayer film for a laminated glass of the present invention.

### DESCRIPTION OF EMBODIMENTS

Embodiments of the present invention are specifically described in the following with reference to, but not limited to, examples.

### (Example 1)

### (1) Preparation of a conductive layer

A polyethylene terephthalate (PET) film with a thickness of 50 µm was used as a substrate. The thermal shrinkage of the substrate was measured in conformity with JIS C2151 after heat treatment at 150°C for 30 minutes, and was 1.1% in the MD direction and 1.2% in the TD direction.

Sputtering was performed on the substrate with use of tin-doped indium oxide (ITO) as a target. The sputtering power was a 1,000 W direct current (DC), the atmospheric gas was argon, the gas flow rate was 50 seem, and the sputtering pressure was 0.5 Pa. Under these conditions, a conductive film formed of tin-doped indium oxide (ITO) with a thickness of 0.05 µm was formed. A conductive layer was thus obtained.

### (2) Preparation of a first resin layer

To 100 parts by weight of polyvinyl butyral (hydroxy group content of 30 mol%, degree of acetylation of 1 mol%, degree of butyralization of 69 mol%, average degree of polymerization of 1,700) were added 40 parts by weight of triethylene glycol di-2-ethylhexanoate (3GO) as a plasticizer, 0.5 parts by weight of 2-(2'-hydroxy-3'-t-butyl-5-methylphenyl)-5-chlorobenzotriazole ("Tinuvin 326" available from BASF SE) as a UV blocking agent, and 0.5 parts by weight of 2,6-di-t-butyl-p-cresol (BHT) as an antioxidant. They were sufficiently kneaded with a mixing roll to prepare a composition. The obtained composition was extruded from an extruder to provide a single-layered resin film with a thickness of 380 µm. One surface of the obtained resin film was embossed to have a ten-point mean roughness Rz measured in conformity with JIS B0601-1982 of 35 µm. The resin film was annealed at 50°C for 30 minutes, thereby preparing a resin layer A as a first resin layer.

The thermal shrinkage of the obtained resin layer A was measured in conformity with JIS C2151 after heat treatment at 150°C for 30 minutes, and was 5.3% in the MD direction and 5.8% in the TD direction.

### (3) Production of an interlayer film for a laminated glass

Two sheets of the resin layers A were prepared. One resin layer A was stacked on the conductive layer in such a manner that the embossed surface faced the conductive layer side and the other resin layer A was stacked on the substrate side surface of the conductive layer in such a manner that the embossed surface faced the substrate side. The laminate was thermal compression bonded to produce an interlayer film for a laminated glass having a triple-layered structure (resin layer A/conductive layer/resin layer A). The thermal compression bonding was performed by a roll-to-roll method using a thermal compression bonding laminator ("MRK-650Y type" available from MCK Co., Ltd.) under the conditions of a heating temperature of 120°C, a bonding pressure of 2 kN, and a feed tension of 100 N. Laminating rolls used for the thermal compression bonding had upper and lower rolls both formed of rubber.

### (Examples 2 and 3 and Comparative Examples 1 to 4)

An interlayer film for a laminated glass was produced in the same manner as in Example 1 except that the substrate of the conductive layer was changed as shown in Table 1.

### (Example 4)

A resin layer B was obtained in the same manner as in the case of the resin layer A except that the conditions for annealing treatment of the resin film were changed to 50°C for 45 minutes.

The thermal shrinkage of the obtained resin layer B was measured in conformity with JIS C2151 after heat treatment at 150°C for 30 minutes, and was 4.3% in the MD direction and 4.8% in the TD direction.

An interlayer film for a laminated glass was produced in the same manner as in Example 1 except that the resin layer B was used instead of the resin layer A.

### (Comparative Example 5)

A resin layer C was obtained in the same manner as in the case of the resin layer A except that the conditions for annealing treatment of the resin film were changed to 25°C for 30 minutes.

The thermal shrinkage of the obtained resin layer C was measured in conformity with JIS C2151 after heat treatment at 150°C for 30 minutes, and was 15.5% in the MD direction and 16.2% in the TD direction.

An interlayer film for a laminated glass was produced in the same manner as in Example 1 except that the resin layer C was used instead of the resin layer A.

### (Example 5)

### (1) Preparation of a conductive layer

A polyethylene terephthalate (PET) film with a thickness of 50 µm was used as a substrate. The thermal shrinkage of the substrate was measured in conformity with JIS C2151 after heat treatment at 150°C for 30 minutes, and was 1.1% in the MD direction and 1.2% in the TD direction.

Sputtering was performed on the substrate with use of silver as a target. The sputtering power was a 1,000 W direct current (DC), the atmospheric gas was argon, the gas flow rate was 50 seem, and the sputtering pressure was 0.5 Pa. Under these conditions, a conductive film formed of silver with a thickness of 0.05 µm was formed. A conductive layer was thus obtained.

### (2) Preparation of a first resin layer

To 100 parts by weight of polyvinyl butyral (hydroxy group content of 30 mol%, degree of acetylation of 1 mol%, degree of butyralization of 69 mol%, average degree of polymerization of 1,700) were added 40 parts by weight of triethylene glycol di-2-ethylhexanoate (3GO) as a plasticizer, 0.5 parts by weight of 2-(2'-hydroxy-3'-t-butyl-5-methylphenyl)-5-chlorobenzotriazole ("Tinuvin 326" available from BASF SE) as a UV blocking agent, and 0.5 parts by weight of 2,6-di-t-butyl -p-cresol (BHT) as an antioxidant. They were sufficiently kneaded with a mixing roll to prepare a composition. The obtained composition was extruded from an extruder to provide a single-layered resin film with a thickness of 380 µm. One surface of the obtained resin film was embossed to have a ten-point mean roughness Rz measured in conformity with JIS B0601-1982 of 35 µm. The resin film was annealed at 50°C for 30 minutes, thereby preparing a resin layer D as a first resin layer.

The thermal shrinkage of the obtained resin layer D was measured in conformity with JIS C2151 after heat treatment at 150°C for 30 minutes, and was 5.2% in the MD direction and 5.5% in the TD direction.

### (3) Production of an interlayer film for a laminated glass

Two sheets of the resin layers D were prepared. One resin layer D was stacked on the conductive layer in such a manner that the embossed surface faced the conductive layer side and the other resin layer D was stacked on the substrate side surface of the conductive layer in such a manner that the embossed surface faced the substrate side. The laminate was thermal compression bonded to produce an interlayer film for a laminated glass having a triple-layered structure (resin layer D/conductive layer/resin layer D). The thermal compression bonding was performed by a roll-to-roll method using a thermal compression bonding laminator ("MRK-650Y type" available from MCK Co., Ltd.) under the conditions of a heating temperature of 120°C, a bonding pressure of 2 kN, and a feed tension of 100 N. Laminating rolls used for the thermal compression bonding had upper and lower rolls both formed of rubber.

### (Example 6)

### (1) Preparation of a conductive layer

A polyimide film with a thickness of 50 µm was used as a substrate. The thermal shrinkage of the substrate was measured in conformity with JIS C2151 after heat treatment at 150°C for 30 minutes, and was 1.1% in the MD direction and 1.2% in the TD direction.

Sputtering was performed on the substrate with use of silver as a target. The sputtering power was a 1,000 W direct current (DC), the atmospheric gas was argon, the gas flow rate was 50 seem, and the sputtering pressure was 0.5 Pa. Under these conditions, a conductive film formed of silver with a thickness of 0.05 µm was formed. A conductive layer was thus obtained.

### (2) Preparation of a first resin layer

To 100 parts by weight of polyvinyl butyral (hydroxy group content of 30 mol%, degree of acetylation of 1 mol%, degree of butyralization of 69 mol%, average degree of polymerization of 1,700) were added 40 parts by weight of triethylene glycol di-2-ethylhexanoate (3GO) as a plasticizer, 0.5 parts by weight of 2-(2'-hydroxy-3'-t-butyl-5-methylphenyl)-5-chlorobenzotriazole ("Tinuvin 326" available from BASF SE) as a UV blocking agent, and 0.5 parts by weight of 2,6-di-t-butyl-p-cresol (BHT) as an antioxidant. They were sufficiently kneaded with a mixing roll to prepare a composition. The obtained composition was extruded from an extruder to provide a single-layered resin film with a thickness of 380 µm. One surface of the obtained resin film was embossed to have a ten-point mean roughness Rz measured in conformity with JIS B0601-1982 of 35 µm. The resin film was annealed at 50°C for 30 minutes, thereby obtaining a resin layer E as a first resin layer.

The thermal shrinkage of the obtained resin layer E was measured in conformity with JIS C2151 after heat treatment at 150°C for 30 minutes, and was 5.4% in the MD direction and 5.5% in the TD direction.

### (3) Production of an interlayer film for a laminated glass

Two sheets of the resin layers E were prepared. One resin layer E was stacked on the conductive layer in such a manner that the embossed surface faced the conductive layer side and the other resin layer E was stacked on the substrate side surface of the conductive layer in such a manner that the embossed surface faced the substrate side. The laminate was thermal compression bonded to produce an interlayer film for a laminated glass having a triple-layered structure (resin layer E/conductive layer/resin layer E). The thermal compression bonding was performed by a roll-to-roll method using a thermal compression bonding laminator ("MRK-650Y type" available from MCK Co., Ltd.) under the conditions of a heating temperature of 120°C, a bonding pressure of 2 kN, and a feed tension of 100 N. Laminating rolls used for the thermal compression bonding had upper and lower rolls both formed of rubber.

### (Evaluation)

The interlayer films for a laminated glass obtained in the examples and comparative examples were evaluated by the following methods.

Table 1 shows the results.

### (1) Appearance evaluation of laminated glass

Windshields for vehicles were produced using the interlayer films for a laminated glass obtained in the examples and comparative examples. The windshields for vehicles have a curved portion in accordance with the shape of a vehicle.

An interlayer film for a laminated glass was sandwiched between two clear glass plates and parts sticking out from the laminate were cut off, thereby preparing a laminated glass structure. The obtained laminated glass structure was placed in a rubber bag and then connected to a vacuum suction device. The rubber bag was heated so that the temperature of the laminated glass structure (preliminary pressure bonding temperature) reached 70°C, while being held under a reduced pressure of -60 kPa (absolute pressure of 16 kPa) for 10 minutes. Thereafter, the pressure was returned to atmospheric pressure, whereby the preliminary pressure bonding was completed. The preliminarily pressure-bonded laminated glass structure was placed in an autoclave, and held at a temperature of 140°C and a pressure of 1,300 kPa for 10 minutes. Thereafter, the temperature was lowered to 50°C and the pressure was returned to atmospheric pressure, whereby the final pressure bonding was completed. Each windshield for vehicles was thus obtained.

Visual observation was performed on the obtained windshields for vehicles as a whole, particularly focusing on the curved part of the glass near the windshield periphery.
○ (Good): Appearance defects including creases or crinkles relative to the glass surface were not at all observed.
× (Poor): Appearance defects including creases or crinkles relative to the glass surface were observed.

### (2) Change in the resistance value of conductive layer

For each of the interlayer films for a laminated glass obtained in the examples and comparative examples, the resistance value of the conductive layer in the state of the interlayer film for a laminated glass was measured. The resistance value was measured as follows. First, a copper foil tape having a width of 10 mm and a length of 100 mm was tightly attached to each end of the conductive layer of the interlayer film to serve as an electrode. Then, a 48-V voltage was applied thereto using a DC power source (PWR800L available from Kikusui Electronics Corp.) and the resistance value at that time was measured. For the measurement of the resistance value, a high-precision high-performance resistivity meter Loresta-GX (Mitsubishi Chemical Analytech Co., Ltd.) was used.

Separately, a laminated glass was produced by the same method as that employed for the appearance evaluation of the laminated glass. The produced laminated glass was connected to a power source via copper foil tapes in the same way as in the case of the interlayer film, and the resistance value of the conductive layer in the obtained laminated glass was measured.

The evaluation was performed using the absolute value A of the resistance value in the state of an interlayer film for a laminated glass and the absolute value B of the resistance value after production of a laminated glass, based on the following criteria.
○○ (Excellent): Difference between A and B was less than 5 Ω/sq.
○ (Good): Difference between A and B was 5 Ω/sq or more but less than 10 Ω/sq.
× (Poor): Difference between A and B was 10 Ω/sq or more.

**[Table 1]**

| | | | Example 1 | Example 2 | Example 3 | Example 4 | Example 5 | Example 6 | Comparative Example 1 | Comparative Example 2 | Comparative Example 3 | Comparative Example 4 | Comparative Example 5 |
|---|---|---|---|---|---|---|---|---|---|---|---|---|---|
| Conductive layer | Conductive film | Material | ITO | ITO | ITO | ITO | Ag | Ag | ITO | ITO | ITO | ITO | ITO |
| | | Thickness (µm) | 0.05 | 0.05 | 0.05 | 0.05 | 0.05 | 0.05 | 0.05 | 0.05 | 0.05 | 0.05 | 0.05 |
| | Substrate | Material | PET | PET | PET | PET | PET | Polyimide | PET | PET | PET | PET | PET |
| | | Thickness (µm) | 50 | 50 | 50 | 50 | 50 | 50 | 50 | 50 | 50 | 50 | 50 |
| | | MD thermal shrinkage (%) | 1.1 | 2.3 | 3.4 | 1.1 | 1.1 | 1.1 | 5.0 | 0.6 | 5.0 | 2.3 | 1.1 |
| | | TD thermal shrinkage (%) | 1.2 | 2.2 | 3.2 | 1.2 | 1.2 | 1.2 | 5.0 | 0.7 | 3.2 | 0.7 | 1.2 |
| First resin layer | Type | | A | A | A | B | D | E | A | A | A | A | C |
| | MD thermal shrinkage (%) | | 5.3 | 5.3 | 5.3 | 4.3 | 5.2 | 5.4 | 5.3 | 5.3 | 5.3 | 5.3 | 15.5 |
| | TD thermal shrinkage (%) | | 5.8 | 5.8 | 5.8 | 4.8 | 5.5 | 5.5 | 5.8 | 5.8 | 5.8 | 5.8 | 16.2 |
| Diffirence in thermal shrinkage between substrate and resin layer | | MD direction (%) | 4.2 | 3.0 | 1.9 | 3.2 | 4.1 | 4.3 | 0.3 | 4.7 | 0.3 | 3.0 | 14.4 |
| | | TD direction (%) | 4.6 | 3.6 | 2.6 | 3.6 | 4.3 | 4.3 | 0.8 | 5.1 | 2.6 | 5.1 | 15.0 |
| Evaluation | Appearance evaluation | | ○ | ○ | ○ | ○ | ○ | ○ | ○ | x | ○ | x | x |
| | Change in resistance value of conductive layer | | ○ | ○ | ○○ | ○ | ○○ | ○ | x | ○ | x | ○ | ○ |

### INDUSTRIAL APPLICABILITY

The present invention can provide an interlayer film for a laminated glass that generates heat under application of a voltage and warms frozen glass to melt frost or ice and also contributes to an excellent appearance of a laminated glass when used in the production of the laminated glass. The present invention can also provide a laminated glass produced using the interlayer film for a laminated glass.

### REFERENCE SIGNS LIST

1: Interlayer film for a laminated glass
2: Conductive layer
21: Substrate
22: Conductive film
3: First resin layer
4: Second resin layer

## Claims

1. An interlayer film for a laminated glass comprising:
a conductive layer comprising a substrate containing a thermoplastic resin and a conductive film formed on the substrate; and
a first resin layer containing a polyvinyl acetal stacked on the conductive film side of the conductive layer,
the substrate having a thermal shrinkage measured in conformity with JIS C2151 of 1.0% to 3.5% in both of MD and TD directions after heat treatment at 150°C for 30 minutes,
the substrate and the first resin layer having a difference in the thermal shrinkage measured in conformity with JIS C2151 of 10% or less in absolute value in both of MD and TD directions after heat treatment at 150°C for 30 minutes.

2. The interlayer film for a laminated glass according to claim 1,
wherein the interlayer film for a laminated glass further comprises a second resin layer containing a polyvinyl acetal stacked on the side opposite to the conductive film side of the conductive layer, and
the substrate and the second resin layer have a difference in the thermal shrinkage measured in conformity with JIS C2151 of 10% or less in absolute value in both of MD and TD directions after heat treatment at 150°C for 30 minutes.

3. A laminated glass comprising:
a pair of glass plates; and
the interlayer film for a laminated glass according to claim 1 or 2 interposed between the pair of glass plates.
